# EUROPEAN PATENT APPLICATION

(11) **EP 0 759 334 A2**
(43) Date of publication of application: **26.02.1997**
(21) Application number: 96305591.8
(22) Date of filing: 30.07.1996
(51) Int. Cl.: B22C 1/18, C04B 28/00

(54) **Clay mineral compositions**

(30) Priority: 17.08.1995 GB 9516838
(71) Applicant: Laporte Industries Limited, London WC1B 3RA (GB)
(72) Inventor: Mobbs, David Barry, Wilmslow, Cheshire, SK9 3NN (GB); Logan, Ian Milne, Faringdon, Oxon SN7 7QE (GB)
(74) Representative: Green, Mark Charles

(57) **Abstract**

A clay mineral composition obtainable by forming a mixture comprising of one or more smectite clay minerals, having a substantial content of calcium and/or magnesium cations and of iron, which clay mineral is to be augmented as to binding or rheological properties, with one or more inorganic compounds containing sodium cations and with one or more alkaline magnesium compounds

## Description

This invention relates to clay mineral compositions, to a process for preparing them and to their use.

In some applications of clay minerals the naturally occurring sodium montmorillonites, such as Wyoming bentonite, may give excellent performance and may be regarded as a standard by which the performance of other clay minerals may be judged. This has been the case in the field of greensand bonding clays in the foundry industry. Natural sodium montmorillonites also show excellent rheological properties in suitable media both in the hydrophilic and organophilic forms.

It has been the practice to treat those clay minerals which are usually less effective than natural sodium montmorillonites, such as the calcium and/or magnesium montmorillonite, to augment performance in particular applications. The present invention lies in this field and, according to one aspect, relates to the augmentation of the properties of smectite clay minerals having a substantial content of calcium and/or magnesium cations and also containing a relatively high content of iron.

GB-A-1 439 828 describes a process for treating calcium montmorillonite to render it more suitable for production of organophilic derivatives by the exchange of clay cations for cations of an onium compound such as an organic ammonium cation containing at least one chain of at least 10 carbon atoms. The clay mineral is treated in the presence of water with one or more inorganic compounds containing sodium cations and anions which form insoluble salts with calcium, and with a minor proportion of one or more alkaline magnesium compounds. The preferred quantity of the one or more compounds containing sodium cations is from 4% to 10% by dry weight of the clay mineral and that of the one or more alkaline magnesium compounds is from 0.5% to 3% by dry weight of the clay mineral. The sodium and magnesium compounds exemplified are sodium carbonate, at a level of 9% by weight, and magnesium oxide, at 1.5% or 2% by weight. The plastic viscosity of the treated clay mineral increased in comparison with the plastic viscosity before treatment.

JP-A-55 158 848 describes a process for treating bentonite to improve the compressive strength of green casting sand compositions in which the bentonite is used as a binder. The treatment is with magnesium oxide in 0.5% to 20% by weight of the bentonite, magnesium hydroxide in 0.7% to 30% by weight of the bentonite or magnesium carbonate in from 1.0% to 40% by weight of the bentonite. There is no disclosure of pre-treating the bentonite with sodium compounds in addition to the magnesium compounds.

The present invention provides a clay mineral composition obtainable by forming a mixture comprising of one or more smectite clay minerals to be augmented having a substantial content of calcium and/or magnesium cations and of iron with one or more inorganic compounds containing sodium cations and with one or more alkaline magnesium compounds, the composition being characterised in that the one or more smectite clay minerals to be augmented has a MgO:Fe₂O₃ ratio of below 0.6 and/or an Al₂O₃:Fe₂O₃ below 2.5 and is present in from above 50 to 95 parts by dry weight in combination with from 50 to 5 parts by dry weight of an auxiliary smectite clay mineral having a MgO:Fe₂O₃ ratio of at least 0.6 and/or an Al₂O₃:Fe₂O₃ ratio of at least 2.5.

The Applicants have found that there is a particular technical significance in the magnesium and iron content of clay minerals and have embodied this finding in a method for the selection of clay mineral combinations having a particular susceptibility to augmentation processes and which can give an augmentation of properties considerably in excess of that which might be expected having regard to the individual clay mineral content of the combination. The theoretical explanation which follows is not to be regarded as limiting on the scope of the monopoly claimed herein. It relates primarily to the high temperature behaviour of clay minerals and can explain to an extent the augmentation of high temperature properties such as durability of clay mineral binders in use as sand casting mould binders. However the invention is surprisingly also found to give greater than expected augmentation in ambient temperature properties, such as rheological properties.

The temperature at which dehydroxylation of layered clay minerals occurs appears to depend, at least to an extent, upon the composition within the octahedral layer. Most dioctahedral smectites with relatively small amounts of iron and magnesium replacing aluminium in the octahedral layer show an endothermic reaction due to loss of lattice water, that is lattice hydroxyl groups, beginning rather gradually at 450°-500°C and ending at about 750°C with peak loss at a temperature of about 700°C. A large amount of replacement of aluminium by iron causes a reduction in the temperature at which the reaction proceeds and dehydroxylation may be complete at a lower temperature. Differences of over 50°C, and often over 100°C, for example up to 150°C, in peak dehydroxylation temperatures are found between clay minerals, having different degrees of substitution by iron, using differential scanning calorimetry. Clays which have high dehydroxylation temperatures by virtue of a low iron content also tend to show an increased ability to rehydroxylate. It is also found that the dehydroxylation temperature of a clay mineral may increase with progressive substitution of iron by magnesium. It is found according to the invention that the mixing of clay minerals having different dehydroxylation peak temperatures, particularly where a major quantity of a clay mineral having a low dehydroxylation temperature is mixed with a minor quantity of a clay mineral having a higher dehydroxylation temperature as a result of its octahedral composition, to provide a broad range of dehydroxylation temperature commensurate with the ranges of peak temperatures indicated above, can augment the performance of the clay mineral mixture considerably. It is also found according to the invention that the presence of a reservoir of available magnesium in the clay mineral mixture, in the form of an added magnesium compound such as, for example, an inorganic alkaline magnesium compound, can augment the high temperature properties of the mixture, possibly by entering vacant octahedral sites present in the clay mineral structure or created by dehydroxylation to an altogether unexpected degree.

The one or more clay minerals containing a substantial proportion of calcium and/or magnesium cations contain at least 1.5% of calcium and/or of magnesium, calculated as the oxides, in the form of lattice cations and a substantial quantity of iron, usually more than 2%, often more than 3% and possibly up to 10%, calculated as ferric oxide. The proportion of such clay mineral, having a MgO:Fe₂O₃ ratio of below 0.6 and/or an Al₂O₃:Fe₂O₃ ratio below 2.5 relative to the smectite clay mineral having a MgO:Fe₂O₃ ratio of at least 0.6 and/or an Al₂O₃:Fe₂O₃ ratio of at least 2.5 is an important feature of the invention and affects the augmentation of the first-mentioned clay mineral. Preferably the said proportion is from 60 parts to 90 parts by dry weight relative to 40 parts to 10 parts of the last-mentioned clay mineral. Particularly preferably the said proportion is at least 70 parts relative to not more than 30 parts of the last mentioned clay mineral. Surprisingly, the optimum degree of augmentation may be found using the preferred or particularly preferred proportions even though the clay mineral present in the lesser proportion may be regarded as the higher quality clay mineral for many applications. Preferably the clay mineral having a substantial proportion of calcium and/or magnesium cations has a MgO:Fe₂O₃ ratio of at least 0.1 and below 0.55, and/or an Al₂O₃:Fe₂O₃ ratio of at least 0.5 and below 2.25 and the smectite clay mineral present in the lesser proportion preferably has a MgO:Fe₂O₃ ratio of at least 0.7 and up to 2.0 or more and/or an Al₂O₃:Fe₂O₃ of at least 3.0 and up to 10 or more.

The smectite clay minerals containing a substantial quantity of calcium and/or magnesium cations may preferably be sedimentary minerals derived from volcanic ash by diagenesis in the presence of calciferous material such as, for example, the calcium and/or magnesium montmorillonites of English origin such as Fuller's earth. According to the invention such a clay mineral may be mixed with the indicated minor proportion of (a) one or more relatively recently hydrothermally altered smectite clay minerals derived from volcanic glass such as, for example montmorillonite clay minerals of Mediterranean origin for example Greek montmorillonites or with a minor proportion of (b) clay minerals derived by diagenesis in the presence of sodium materials, such as the mineral trona or a brine, such as, for example, naturally occurring or lightly processed sodium montmorillonites or with a minor proportion of a combination of (a) and (b). A suitable Mediterranean montmorillonite is that mined at Milos or Mykobar, Greece, or is Sardinian montmorillonite and a suitable naturally occurring sodium montmorillonite is Wyoming bentonite.

The MgO:Fe₂O₃ and Al₂O₃:Fe₂O₃ ratios of various clay minerals which are examples of clay minerals which are usable according to the invention are set out in the following Table. The first three clay minerals are suitable for use as auxiliary clay minerals according to the invention while the last five clay minerals are English calcium montmorillonites having high iron contents which are suitable for augmentation according to the invention.

**TABLE 1**

| Mineral Source | MgO:Fe₂O₃ | Al₂O₃:Fe₂O₃ |
|---|---|---|
| Sardinia | 0.899 | 6.03 |
| Greece (1) | 1.248 | 6.57 |
| Greece (2) | 0.745 | 3.5 |
| | | |
| Oxfordshire | 0.47 | 1.88 |
| Surrey (1) | 0.43 | 1.71 |
| Surrey (2) | 0.53 | 2.0 |
| Bedfordshire (1) | 0.41 | 1.57 |
| Bedfordshire (2) | 0.2 | 0.9 |

The term bentonite is used to mean a naturally occurring sodium bentonite or a sodium exchanged calcium bentonite unless the context requires otherwise. Clay minerals usually contain electromicroscopically discernable shard structures of volcanic origin and may also contain non-clay minerals of igneous origin such as feldspars which may enable minerals of various origins to be distinguished. Clay minerals, together with their minor mineral inclusions are also identifiable by chemical analysis, x-ray diffraction and infra-red spectrophotometry. The identification of certain montmorillonites of Greek origin, that is Miloan bentonites, by such means is described in Clays and Clay minerals, Vol 43, No 1, 63-77 (1995) Christidis et al. It may be seen from that paper that contents of igneous minerals are clearly discernable by x-ray diffraction and that infra-red spectroscopy can provide a clear fingerprint for the hydrothermally altered minerals. Such techniques may be used by the skilled worker to identify clay mineral combinations suitable for use in the practice of the invention. The invention may also be applied to other layered clay minerals which contain an aluminium-based octahedral layer.

The presence of one or more inorganic compounds containing sodium cations is an essential feature of the invention. Such compounds may already be present in the auxiliary clay mineral which is, preferably, a processed sodium exchanged mineral containing from about 1% to 4% of the added sodium compound. The clay mineral to be augmented may have been similarly processed. Suitable clay minerals are available commercially as processed sodium-form clays, for example under the Trade Marks Brebond or Fulbond from Laporte Plc. It is found according to the invention that it is usually advantageous to add a quantity of a compound containing sodium cations, and that there is an optimum level of addition of the same, over and above any content of sodium compounds already present in processed clay minerals used in the clay mineral combination according to the invention. Preferably, the added sodium compound is present in at least 1% particularly preferably at least 2% and up to 6% by dry weight of the clay mineral composition. It has been found that the properties of the final product may be improved by using an increasing quantity of added sodium compound up to about 5% after which there may be a gradual diminution of properties. The total quantity of the sodium compound, taking into account any already added to the clay minerals may suitably be from about 2% to about 7% by weight of the combination of clay minerals. Preferred sodium compounds are sodium carbonate or soda ash.

The one or more added magnesium compounds may also be an inorganic compound, for example magnesium carbonate, magnesium hydroxide or magnesium oxide. The last-mentioned compound hydrates slowly in contact with the damp clay mineral clod during the ageing process. A preferred quantity of added magnesium compound is at least 0.25% and up to 1% by dry weight of the clay mineral composition. A larger quantity, such as up to below 1.5%, or more, even up to 3%, may be used but is not normally of further advantage.

The admixture according to the invention comprises forming a mixture of the clay mineral combination described above, the compound containing sodium cations and the magnesium compound. This may be a dry mix operation. At some point before use, for example when being made up into a sand mould mixture, water is added in at least a minimum quantity to allow ion exchange to occur, for example in at least 2% by weight of the composition. The composition is preferably aged at this point to allow the properties of the mixture to become optimised, for example for at least 2 days or, possibly, at least 3 days preferably at a temperature at from about 15°C to about 25°C. The effect of ageing is surprisingly found to be greater when the major proportion of the clay mineral combination is larger. The ageing may be conducted for a longer period if desired, for example up to 28 days. Ageing is more effective when magnesium hydroxide is used.

The clay minerals may suitably be dried to a moisture content of from 5% to 25% % by weight, or more preferably to not more than 15% by weight and milled to at least 90% by weight smaller than 150 microns. The treatment according to the invention may be carried out by milling the clay minerals and then blending them together and with the sodium compound, and the magnesium compound. Alternatively, the clay minerals and the other constituents may be blended and then milled. Suitable milling equipment is a crushing mill, such as a Raymond mill, a pin mill or a ball mill.

Compositions according to the invention are particularly suitable for use as greensand bonding clays in the foundry industry, or for other uses involving exposure to temperatures of at least 500°C, and this will be specifically illustrated hereafter. While properties such as initial green compression strength and wet tensile strength are of importance to a mould bonding clay the property of overriding importance is green compression strength retained after heating at elevated temperature, such as 500°C to 600°C. This last property gives an indication of the durability of the clay in repeated use and of the amount of make-up clay required. Even a small increase in durability can reduce moulding costs appreciably. It will be shown that, in the compositions according to the invention, there is an increase in durability far in excess of that expected from the individual component clay minerals and even in excess, in some cases, of the individual durability of the minor proportion of the combination. This can transform the utility of the clay mineral forming the major proportion of the combination. Compositions according to the invention are also of use in general rheological applications, in dispersion in aqueous or organic liquids, since they show a greatly augmented swelling volume and gel strength at a given clay mineral concentration and can often considerably outperform Wyoming bentonite in rheological applications. It is envisaged that the compositions according to the invention may be used as binders for particulate materials or as thickeners in aqueous media, or in organic media in their organophilic form.

The invention will now be illustrated by reference to the following Examples of specific embodiments according to the invention and, for comparative purposes, of specific embodiments not according to the invention. Examples 1 to 17 and 28 to 30 are comparative Examples not according to the invention and Examples 18 to 27 are according to the invention.

The clay mineral compositions tested comprised individual samples of sodium activated English calcium montmorillonite, Wyoming bentonite and sodium activated Greek calcium montmorillonite. The English clay mineral had been treated with 4% by weight sodium carbonate and had a MgO:Fe₂O₃ ratio in the range 0.2 to 0.5 and an Al₂O₃:Fe₂O₃ ratio in the range 0.9 to 2.0. This material is available from Laporte Industries Plc under the Trade Mark Brebond. The Greek clay mineral had been treated with about 4% by weight of sodium carbonate and was a calcium montmorillonite from deposits in Milos or Mykobar. It had a MgO:Fe₂O₃ ratio in the range 0.7 to 1.0 and an Al₂O₃:Fe₂O₃ ratio in the range 3.5 to 7.0. Tests were also carried out on blends of the above minerals with and without the addition of a magnesium compound at the indicated addition level.

The clay minerals and blends were tested for moisture loss under specified heating conditions, wet tensile strength, initial green compression strength and retained green compression strength as follows. The samples to be tested were propared as follows. The clay mineral was mixed with Chelford 50 or 60 dry silica sand and water in the proportions sand 1.2 Kg, Clay mineral 63.16 g and water 36 g. The dry components were introduced into a Ridsdale edge runner mill with the water and milled for 5 minutes. The moisture loss of the resulting moulding sand compositions was measured using a fan-assisted oven controlled at 105°C +/- 5°C using a drying time of 4 hours. The wet tensile strength of the compositions was measured using a George Fischer metric sand rammer and Type PNZ wet tensile strength testing apparatus. The green compression strength of the compositions was measured using a Ridsdale Dietert universal sand strength machine and a AFS standard sand rammer initially on preparation of the compositions. To determine the high temperature durability of the composition, tests were also conducted after heat soaking at 600°c +/- 10°C for 1 hour followed by ageing in storage at ambient temperature for 28 days, or for a shorter period if indicated (retention tests).

In the Examples the following abbreviations are used:

| | |
|---|---|
| ML | Moisture loss |
| WTS | Wet Tensile Strength |
| GCS | Green compression strength |
| (I) | Initial test result |
| (R) | Retention test result. |

### Examples 1 to 12.

The effect on composition properties of processing the English montmorillonite, not in admixture with any other clay mineral, in the presence of varying amounts of sodium carbonate and of magnesium oxide. The procedure for forming the compositions is as described above. The quantities of sodium carbonate and of magnesium oxide are as set out in Tables IA and IB, the results of tests for initial moisture loss, initial green compression strength and initial wet tensile strength are as set out in the Table IA and the retained values for the same tests are set out in Table IB.

**Table IIA**

| Ex.No. | Na₂CO₃ Total Wt % | MgO Wt % | ML % | GCS(I) | WTS(I) |
|---|---|---|---|---|---|
| 1 | 2 | 0 | 2.98 | 7.4 | 35 |
| 2 | 3 | 0 | 2.9 | 8.3 | 44 |
| 3 | 4 | 0 | 2.9 | 8.1 | 42 |
| 4 | 5 | 0 | 3 | 8.2 | 37 |
| 5 | 6 | 0 | 3 | 8.7 | 31 |
| 6 | 2 | 0.5 | 2.93 | 9 | 35 |
| 7 | 3 | 0.5 | 2.95 | 9.4 | 40 |
| 8 | 4 | 0.25 | 3.14 | 8.8 | 45 |
| 9 | 4 | 0.5 | 2.84 | 9.8 | 37 |
| 10 | 4 | 0.75 | 3.16 | 9.7 | 37.5 |
| 11 | 5 | 0.5 | 3 | 9.7 | 30 |
| 12 | 6 | 0.5 | 2.82 | 9.9 | 28 |

**Table II(B)**

| Ex.No. | Na₂CO₃ Total Wt % | MgO Wt % | ML(R)% | GCS(R) | WTS(R) |
|---|---|---|---|---|---|
| 1 | 2 | 0 | 3.09 | 1.2 | 19.5 |
| 2 | 3 | 0 | 3.14 | 3 | 21 |
| 3 | 4 | 0 | 3.01 | 3.8 | 23 |
| 4 | 5 | 0 | 3.11 | 2.8 | 17.5 |
| 5 | 6 | 0 | 2.92 | 3 | 17 |
| 6 | 2 | 0.5 | 3.19 | 1.8 | 15 |
| 7 | 3 | 0.5 | 3.19 | 2.9 | 17 |
| 8 | 4 | 0.25 | 3.03 | 3.7 | 15.5 |
| 9 | 4 | 0.5 | 3 | 3.5 | 19.5 |
| 10 | 4 | 0.75 | 3.08 | 3.4 | 17.5 |
| 11 | 5 | 0.5 | 3.07 | 3 | 18.5 |
| 12 | 6 | 0.5 | 2.79 | 2.6 | 15 |

The optimisation of the quantity of sodium carbonate and the inclusion of the magnesium compound of themselves achieved some degree of augmentation of the montmorillonite properties. However there was a very marked deterioration in the properties after heat soaking, the (R) results, as seen from the above Table.

### Examples 13 to 22

The effect of processing clay minerals and blends, containing 4% sodium carbonate, in the presence and absence of a magnesium compound, before and after heat soaking, was investigated . The identity of the clay minerals and the magnesium compound and the initial and retained green compression strength are set out in Table II.

**Table III**

| Ex.No. | Mineral(s) wt.% | MgO % wt | Mg(OH)₂ % wt | GCS(I) | GCS(R) |
|---|---|---|---|---|---|
| 13 | English 100 | | | 9.1 | 3.5 |
| 14 | Greek 100 | | | 8.7 | 7.2 |
| 15 | Wyoming 100 | | | 6.5 | 6.6 |
| 16 | English 75/Greek 25 | | | 8.3 | 7.8 |
| 17 | English 85/Wyoming 15 | | | 8.6 | 5 |
| 18 | English 85/Greek 15 | 0.5 | | 9.7 | 7.8 |
| 19 | as Ex 18 | | 0.5 | 8.8 | 8.5 |
| 20 | as Ex 18 | 0.75 | | 9.5 | 9 |
| 21 | as Ex 18 | | 0.75 | 8.8 | 9 |
| 22 | English 85/Wyoming 15 | 0.5 | | 9.3 | 8 |

It is apparent that blending clay minerals of differing origins of itself gave some degree of improvement in the retention properties of the English bentonite. The addition of a magnesium compound to the blends produced no improvement over similarly treated English montmorillonite in initial green compression strength but gave a very great improvement in retained green compression strength ( high temperature properties) that is, from 3.4 (Ex.10) to 9 (Ex. 20) or from 3.5 (Ex. 9) to 7.8 (Ex.18) or 8 (Ex. 22). The final green compression strength retention figures shown in Examples 18 to 22 are better than the figures obtained using even 100% Greek or Wyoming bentonites in Examples 14 or 15.

### Examples 23 to 26

Mixtures of Brebond (75 or 85% by weight of clay mineral mixture), Greek bentonite (25 or 15% by weight of the clay mineral mixture), sodium carbonate (4% of the clay mineral mixture) and magnesium oxide or hydroxide (0.75 or 0.5% of the clay mineral mixture) were tested for initial and retained green compression strength of the product. The results are indicated Table IV for each of four identified compositions.

**Table IV**

| Composition (Parts by weight) | GCS(I) | GCS(R) (3 days) |
|---|---|---|
| Brebond 75 | | |
| Greek 25 | 5.2 | 6.6 |
| Mg(OH)₂ 0.75% | | |
| | | |
| Brebond 85 | | |
| Greek 15 | 5.6 | 7.3 |
| Mg(OH)₂ | | |
| | | |
| Brebond 75 | | |
| Greek 25 | 7.5 | 9.2 |
| MgO 0.75% | | |
| | | |
| Brebond 85 | | |
| Greek 15 | 7.2 | 8.9 |
| MgO 0.5% | | |

In all four Examples the retained green compression strength was more than 100% of the initial value after 3 days of ageing.

### Examples 27 to 30

The ambient temperature rheological testing of the clay mineral combination of the invention in comparison with Wyoming bentonite and with the individual clay minerals used to prepare the composition of the invention.

A clay mineral composition according to the invention consisted of 75 parts by weight English calcium montmorillonite having a MgO:Fe₂O₃ ratio below 0.5 and an Al₂O₃:Fe₂O₃ ratio below 2.0 which had been treated with 4% of sodium carbonate, 25 parts by weight Greek calcium montmorillonite having a MgO:Fe₂O₃ ratio above 0.7 and an Al₂O₃:Fe₂O₃ ratio above 3.0 which had also been treated with about 4% by weight of sodium carbonate and 0.75% of MgO by weight of the clay mineral combination. This product had an overall weight composition, calculated as oxides, as follows:

| | |
|---|---|
| SiO₂ | 57.81 |
| Al₂O₃ | 15.79 |
| Fe₂O₃ | 7.38 |
| MgO | 4.13 |
| CaO | 2.55 |
| Na₂O | 2.68 |
| K₂O | 0.53 |
| TiO₂ | 0.74 |

This composition was tested for cation exchange capacity (C.E.C m eq/100g), swelling volume in water (ml/2g composition), and gel strength (the lowest % of the composition which gives a gel, sufficiently strong to withstand inversion of a test tube containing an aqueous gel, measured after 10 minutes and after 24 hours. Wyoming bentonite, the English bentonite used in the composition according to the invention and the Greek bentonite which had been used in the same composition, each as 100% clays with no additives save that the last two clay minerals had been treated with 4% of sodium carbonate, were subjected to the same tests to provide comparative data. The results are set out in Table V below.

**Table V**

| Example | 27 Invention | 28 Wyoming | 29 English | 30 Greek |
|---|---|---|---|---|
| C.E.C (Meq/100g) | 92 | 90 | 97 | 88 |
| Swelling Vol.(Ml/2g) | 40 | 38 | 30 | 16 |
| Gel Test (10 min) | 4 | 9 | 6 | 9 |
| Gel Test (24 Hours) | 3 | 6 | 5 | 6 |

The swelling volume given by the composition according to the invention, comprising 75 parts of English montmorillonite and 25 parts of Greek montmorillonite, is equal to or better than that given by Wyoming bentonite and considerably better than either of the constituent clay minerals when used alone. The further addition of magnesium oxide to the individual clay minerals gave no further augmentation of their swelling properties. The composition according to the invention was found to be at least twice as efficient as Wyoming bentonite in binding water to form a gel at a given clay mineral concentration, that is, it required only about one half of the clay mineral concentration to achieve the same result.

## Claims

1. A clay mineral composition obtainable by forming a mixture comprising of one or more smectite clay minerals, having a substantial content of calcium and/or magnesium cations and of iron, which clay mineral is to be augmented as to binding or rheological properties, with one or more inorganic compounds containing sodium cations and with one or more alkaline magnesium compounds, the composition being characterised in that the one or more smectite clay minerals to be augmented has a MgO:Fe₂O₃ ratio of below 0.6 and/or an Al₂O₃:Fe₂O₃ below 2.5 and is present in from above 50 to 95 parts by dry weight in combination with from 50 to 5 parts by dry weight of an auxiliary smectite clay mineral having a MgO:Fe₂O₃ ratio of at least 0.6 and/or an Al₂O₃:Fe₂O₃ ratio of at least 2.5.

2. A composition as claimed in claim 1 wherein the proportion of the clay mineral having a MgO:Fe₂O₃ ratio of below 0.6 and/or an Al₂O₃:Fe₂O₃ below 2.5 relative to the clay mineral having a MgO:Fe₂O₃ ratio of at least 0.6 and/or an Al₂O₃:Fe₂O₃ ratio of at least 2.5 is from 60 to 90 parts: 40 to 10 parts by dry weight.

3. A composition as claimed in claim 1 or 2 wherein the clay mineral having a substantial proportion of calcium and/or magnesium cations has a MgO:Fe₂O₃ ratio of at least 0.1 and below 0.55, and/or an Al₂O₃:Fe₂O₃ ratio of at least 0.5 and below 2.25 and the auxiliary clay mineral has a MgO:Fe₂O₃ ratio of at least 0.7 and up to 2.0 and/or an Al₂O₃:Fe₂O₃ of at least 3.0 and up to 10.

4. A composition as claimed in any preceding claim wherein the clay mineral or minerals to be augmented comprises or consists of one or more sodium exchanged calcium and/or magnesium montmorillonites.

5. A composition as claimed in any preceding claim wherein the auxiliary clay mineral or minerals comprises or consists of a sodium treated Mediterranean calcium montmorillonite and/or a natural sodium bentonite.

6. A composition as claimed in any preceding claim containing a compound containing sodium cations in from above 2% to 7% by dry weight of the clay minerals in the composition.

7. A composition as claimed in claim 6 obtainable by mixing preformed sodium exchanged montmorillonites with an added quantity of from 2% to 5% of a sodium compound by dry weight of the processed montmorillonites.

8. A composition as claimed in any preceding claim wherein the added source of magnesium cations is magnesium oxide, magnesium hydroxide or magnesium carbonate.

9. A composition as claimed in any preceding claim having rheological or thermal resistance properties at least equal to those of Wyoming bentonite.

10. A composition as claimed in claim 1 and substantially as described herein with reference to any one of the Examples.

11. A solid particulate composition comprising as a binder a composition as claimed in any one of claims 1 to 9.

12. A composition as claimed in claim 10 wherein the particulate composition is a sand casting mould composition.

13. A composition having rheological properties comprising a composition as claimed in any one of claims 1 to 9 in dispersion in an aqueous medium.

14. An organophilic rheological composition comprising a composition as claimed in any one of claims 1 to 9 containing organophilic cations.
